**Europäisches Patentamt**

**European Patent Office**

**Office européen des brevets**

(11) Veröffentlichungsnummer: **0 261 491**
**A2**

## (12) EUROPÄISCHE PATENTANMELDUNG

(21) Anmeldenummer: 87113078.7

(22) Anmeldetag: 08.09.87

(51) Int. Cl.4: **H02J 7/00**

(30) Priorität: 23.09.86 DE 3632219

(43) Veröffentlichungstag der Anmeldung:
30.03.88 Patentblatt 88/13

(84) Benannte Vertragsstaaten:
CH DE FR GB LI

(71) Anmelder: GRUNDIG E.M.V.
Elektro-Mechanische Versuchsanstalt Max
Grundig
Kurgartenstrasse 37
D-8510 Fürth(DE)

(72) Erfinder: Scherer, Franz GRUNDIG E.M.V. Max
Grundig Holländ
Stiftung & Co KG Kurgartenstrasse 37
D-8510 Fürth/Bay(DE)

(54) **Batteriebetriebenes elektronisches Gerät.**

(57) Bei einem batteriebetriebenen elektronischen Gerät mit einer Einrichtung zur Umschaltung zwischen Standby-Betrieb und aktivem Betrieb sind mit der Einrichtung zur Wahl der Betriebsart weitere Schalteinrichtungen gekoppelt, die bei der Umschaltung vom aktiven Betrieb auf Standby-Betrieb von der Batteriespannung versorgte Schaltungsteile mit großen Ladezeitkonstanten vom übrigen Netzwerk so trennen, daß die Ladezustände der Kondensatoren, die die Zeitkonstanten der betreffenden Schaltungsteile bestimmen, für den späteren aktiven Betrieb erhalten bleiben.

EP 0 261 491 A2

## BATTERIEBETRIEBENES ELEKTRONISCHES GERÄT

Die Erfindung betrifft ein batteriebetriebenes elektronisches Gerät der im Oberbegriff des Anspruchs 1 angegebenen Art.

Bei einem batteriebetriebenen Gerät kommt dessen Strombedarf eine besondere Bedeutung zu. Dieser bestimmt maßgeblich die Entladezeit der Batterie und somit die Zeitspanne, für die das Gerät ohne Erneuerung der Batterie betriebsfähig ist. Maßnahmen, diese Zeitspanne durch Reduzierung des Stromverbrauchs zu vergrößern, sind bekannt.

So besteht eine Möglichkeit, Strom zu sparen, darin, das Gerät während der Zeit, in der es nicht aktiv arbeiten braucht, in der jedoch seine Betriebsbereitschaft laufend gewährleistet sein muß, in einen Bereitschaftszustand (Standby-Betrieb) zu schalten. Diese Betriebsart zeichnet sich dadurch aus, daß lediglich Schaltungsteile mit sehr großen Ladezeitkonstanten oder längeren Vorheizzeiten mit Energie versorgt werden. Dagegen werden andere Schaltungsteile während dieser Zeit von der Energiequelle getrennt. Für bestimmte Geräte reicht eine derartige Stromsparschaltung allerdings noch nicht aus.

Aus der EP-OS 0 092 219 ist eine Empfangseinrichtung mit Stromsparschaltung bekannt, bei der beim Ein-bzw. Aktivschalten des Gerätes Schaltungsteile mit unterschiedlich langem Einschwingverhalten bzw. mit unterschiedlich langen Ladezeitkonstanten zeitversetzt an die Batteriespannung gelegt werden. Der technische Aufwand hierfür (Verzögerungsschaltungen, besondere Zeitglieder) ist allerdings sehr hoch und die damit erreichbare Energieeinsparung gering.

Der Erfindung liegt die Aufgabe zugrunde, ein batteriebetriebenes elektronisches Gerät mit einer Einrichtung zur Umschaltung zwischen Standby-Betrieb und aktivem Betrieb so auszubilden, daß mit geringem technischen Aufwand ein möglichst großer zusätzlicher Stromspareffekt erzielt wird.

Diese Aufgabe wird gemäß der Erfindung durch die im kennzeichnenden Teil des Patentanspruchs 1 angegebenen Merkmale gelöst. Eine vorteilhafte Weiterbildung der Erfindung ist im Unteranspruch gekennzeichnet.

Bei batteriebetriebenen elektronischen Geräten gemäß der Erfindung wird in vorteilhafter Weise bei der Umschaltung vom aktiven Betrieb auf Standby-Betrieb die Entladung von Kondensatoren unterbunden, die ein längeres Einschwingen von bestimmten Schaltungsteilen verursachen. Hierzu sind mit der Einrichtung zur Wahl der Betriebsart Schalteinrichtungen gekoppelt, die bei der Umschaltung vom aktiven Betrieb auf Standby-Betrieb von der Batteriespannung versorgte Schaltungsteile mit großen Ladezeitkonstanten vom übrigen Netzwerk so trennen, daß die Ladezustände der Kondensatoren, die die Zeitkonstanten der betreffenden Schaltungsteile bestimmen, für den späteren aktiven Betrieb erhalten bleiben.

Bei einer bevorzugten Ausführungsform der Erfindung sind als Schalteinrichtungen zur Trennung der betreffenden Schaltungsteile vom übrigen Netzwerk Halbleiter vorgesehen.

Die Erfindung ist insbesondere anwendbar bei Geräten, deren Schaltungen zum Beispiel Spannungskomparatoren, Stellspannungsglieder oder große Koppelkondensatoren enthalten. Hierbei macht sich die Stromeinsparung vor allem bei den Geräten erheblich bemerkbar, bei denen ein sehr häufiges Umschalten zwischen aktivem Betrieb und Standby-Betrieb erfolgt, da in solchen Fällen die Anzahl der eingesparten Ladevorgänge sehr groß ist.

### Ansprüche

1. Batteriebetriebenes elektronisches Gerät mit einer Einrichtung zur Umschaltung zwischen Standby-Betrieb und aktivem Betrieb, **dadurch gekennzeichnet,** daß mit der Einrichtung zur Wahl der Betriebsart weitere Schalteinrichtungen gekoppelt sind, die bei der Umschaltung vom aktiven Betrieb auf Standby-Betrieb von der Batteriespannung versorgte Schaltungsteile mit großen Ladezeitkonstanten vom übrigen Netzwerk so trennen, daß die Ladezustände der Kondensatoren, die die Zeitkonstanten der betreffenden Schaltungsteile bestimmen, für den späteren aktiven Betrieb erhalten bleiben.

2. Batteriebetriebenes elektronisches Gerät nach Anspruch 1, dadurch gekennzeichnet, daß als Schalteinrichtungen Halbleiter vorgesehen sind.